# NEUE EUROPÄISCHE PATENTSCHRIFT

(11) **EP 2 040 352 B2**
(45) Veröffentlichungstag und Bekanntmachung des Hinweises auf die Entscheidung über den Einspruch: **19.11.2014**
(45) Hinweis auf die Patenterteilung: 11.05.2011
(21) Anmeldenummer: 07018589.7
(22) Anmeldetag: 21.09.2007
(51) Int. Cl.: H02K 5/12, H02K 5/14, H02K 5/128, B29C 45/14

(54) **Spaltrohr sowie Verfahren zum Herstellen eines Spaltrohres**
Airgap sleeve and manufacturing method thereof
Gaine d'entrefer et son procédé de fabrication

(43) Veröffentlichungstag der Anmeldung: 25.03.2009
(73) Patentinhaber: Grundfos Management A/S, 8850 Bjerringbro (DK)
(72) Erfinder: Hansen, Toftegaard Jørn, 8600 Silkeborg (DK); D`Antonio, Sébastien, 8850 Bjerringbro (DK); Ørsnæs, Morton Vammen, 8850 Bjerringbro (DK)
(74) Vertreter: Hemmer, Arnd

(56) Entgegenhaltungen:
- EP-A- 0 268 085
- EP-A- 0 466 947
- EP-A- 0 934 809
- EP-A- 1 059 722
- EP-A1- 0 466 947
- EP-A2- 0 290 824
- EP-A2- 1 584 452
- EP-A2- 1 649 999
- EP-A2- 1 703 135
- EP-B1- 0 268 085
- EP-B1- 1 059 722
- DE-A1- 19 747 021
- DE-A1- 19 912 614
- DE-A1-102005 039 124
- DE-C1- 4 342 649
- DE-C1- 4 404 235
- DE-C1- 4 404 235
- JP-A- 61 189 913
- JP-A- S61 189 913
- DR.-ING. F. JOHANNABER ET AL.: 'Handbuch Spritzgießen', Bd. 2, 2004, CARL HANSER VERLAG, MÜNCHEN Seiten 386 - 389
- A. MEDDAD ET AL.: 'Weldline Strength in Glass Fiber Reinforced Polyamide 66' POLYMER ENGINEERING AND SCIENCE Bd. 35, Nr. 11, 1995, Seiten 893 - 901
- M. WALTER ET AL.: 'Endlosverstärkte Teile durch Umspritzen' PLASVERARBEITER Bd. 49, Nr. 1, Januar 1998, Seiten 37 - 39

## Beschreibung

Die Erfindung betrifft ein Spaltrohr eines Antriebsmotors für ein Pumpenaggregat, beispielsweise ein Heizungsumwälzpumpenaggregat sowie ein Verfahren zum Herstellen eines solchen Spaltrohres.

Die Antriebsmotoren derartiger Pumpenaggregate sind als Nassläufer ausgebildet, wobei ein Spaltrohr zwischen Stator- und Rotorraum angeordnet ist, welches den fluidgefüllten Rotorraum von dem trockenen Statorraum trennt. Bislang wurden derartige Spaltrohre häufig aus Metall gefertigt. Dies hat jedoch den Nachteil, dass sie das Magnetfeld zwischen Stator und Rotor beeinträchtigen. Aus diesem Grund ist es bevorzugt, elektrisch nicht leitende Spaltrohre einzusetzen, beispielsweise Spaltrohre aus Kunststoff. Bei den Spaltrohren aus Kunststoff besteht jedoch das Problem, die gewünschte Druckfestigkeit bei höheren Pumpendrücken zu gewährleisten. Dazu muss das Spaltrohr eine gewisse Mindestdicke aufweisen. Mit zunehmender Dicke des Spaltrohres vergrößert sich jedoch der Abstand zwischen Rotor und Stator, wodurch der Wirkungsgrad des Antriebsmotors verschlechtert wird.

DE 4 342 649 offenbart eine Magnetkreiselpumpe mit einem Spalttopf.

Es ist daher Aufgabe der Erfindung, ein Spaltrohr eines Antriebsmotors derart zu verbessern, dass es zum einen so ausgebildet werden kann, dass es das Magnetfeld zwischen Rotor und Stator nicht oder nur wenig beeinflusst und darüber hinaus dünner ausgebildet werden kann, um den Abstand zwischen Rotor und Stator verringern zu können.

Diese Aufgabe wird durch ein Spaltrohr mit dem im Anspruch 1 angegebenen Merkmalen sowie durch ein Verfahren zum Herstellen eines Spaltrohres mit den im Anspruch 10 angegebenen Merkmalen gelöst. Bevorzugte Ausführungsformen ergeben sich aus den zugehörigen Unteransprüchen, der nachfolgenden Beschreibung sowie den beigefügten Figuren.

Das erfindungsgemäße Spaltrohr für einen Antriebsmotor eines Pumpenaggregates, insbesondere eines Heizungsumwälzpumpenaggregates, ist zumindest teilweise aus Kunststoff gefertigt. Bevorzugt ist das Spaltrohr im Wesentlichen vollständig aus Kunststoff ausgebildet, um das Magnetfeld zwischen Rotor und Stator im Motor wenig zu stören. Es ist jedoch auch möglich, einzelne Teile, beispielsweise auch einzelne Lagen oder Schichten des Spaltrohres aus metallischen Materialen auszubilden. Dies kann beispielsweise erwünscht sein, um das Spaltrohr aus Kunststoff zu verstärken oder eine dünne fluiddichte Metallschicht an oder in dem Spaltrohr auszubilden.

Erfindungsgemäß weist das Spaltrohr eine äußere Lage aus einem vorgespannten Material und eine innere Lage aus einem gespritzten Kunststoff auf. Bei dem vorgespannten Material handelt es sich um ein Material, welches elastisch dehnbar ist und im gedehntem Zustand mit der inneren Lage verbunden ist, sodass das Material im gedehntem Zustand verbleibt. Aufgrund der elastischen Rückstellkräfte im Material wird so eine Vorspannung erzeugt. Bei dem gespritzten Kunststoff kann es sich um ein homogenes Material, jedoch auch um ein Komposit-Material handeln, d. h. ein Material, welches mit anderen Materialien verbunden ist oder Bestandteile aus anderen Materialien enthält, beispielsweise Verstärkungsfasern, wie unten beschrieben.

Die innere und die äußere Lage zusammen können für eine ausreichende Festigkeit des Spaltrohres auch bei dünnen Wandstärken sorgen. Beim Ausbilden der inneren Lage aus gespritztem Kunststoff an der äußeren Lage wird eine gewisse Dehnung dieser äußeren Lage erreicht. Da die äußere Lage ringförmig bzw. zylindrisch ausgebildet ist, wird in dieser somit vor allem eine umfängliche Zugspannung und gegebenenfalls axiale Zugspannung erzeugt, welche zu einer radial nach innen gerichteten auf die innere Schicht wirkenden Druckkraft führt. Durch diese Anordnung wird ein Ablösen der Lagen voneinander verhindert. Ein solches Ablösen könnte beispielsweise dadurch auftreten, dass das Material der inneren Lage beim Erkalten schrumpft und sich dann von der äußeren Lage löst. Durch die dehnbare Ausgestaltung der äußeren Lage wird bei der Schrumpfung erreicht, dass sich die dehnbare Lage wiederum ein gewisses Maß zusammen ziehen kann und somit im festen Kontakt mit der inneren Lage verbleibt.

Die Vorspannung der äußeren Lage ist vorzugsweise so ausgebildet, dass in der äußeren Lage Zugspannungen in umfänglicher Richtung und vorzugsweise auch in axialer Richtung bestehen. Diese bewirken eine von außen auf die innere Lage wirkende Druckspannung, d. h. die innere Lage wird durch die äußere Lage zusammengedrückt. Hierdurch kann einer Rissbildung in der inneren Lage entgegengewirkt werden, sodass auch bei dünnerer Ausgestaltung des Spaltrohres eine ausreichende Dichtigkeit gewährleistet werden kann.

Vorzugsweise enthält das vorgespannte Material ein Fasermaterial und insbesondere ein Gewebe, welches vorzugsweise in ein Kunststoffmaterial eingebettet ist. Vorzugsweise ist die gesamte äußere Lage als Faser-und/oder Gewebestruktur ausgebildet, welche eine vorgefertigte Form entsprechend der Form des Spaltrohres aufweist. Die Fasern bzw. die Gewebestruktur ist vorzugsweise so gerichtet, dass sie die im Inneren des Spaltrohres auftretenden Druckkräfte aufnehmen kann und insbesondere das Spaltrohr in umfänglicher Richtung stabilisieren kann.

Erfindungsgemäß ist die äußere Lage um ein Maß elastisch dehnbar ausgebildet, welches größer ist als das Maß, um welches der gespritzte Kunststoff bei seiner Erstarrung schrumpft. Wenn die Dehnung des äußeren Materials genau der Schrumpfung des Materials der inneren Lage entspricht, kann erreicht werden, dass im erstarrten Zustand die beiden Lagen spannungsfrei aneinander anliegen. Besonders bevorzugt ist es jedoch, dass die Dehnung des äußeren Materials beim Einspritzen des Kunststoffes der inneren Lage größer ist als Schrumpfung des Materials der inneren Lage beim Erstarren. Auf diese Weise wird erreicht, dass im erkalteten Zustand des Spaltrohres in der äußeren Lage Zugspannungen herrschen, während in der inneren Lage Druckspannungen herrschen. Durch diese Spannungen werden diese Lagen fest aneinander gehalten. Darüber hinaus wirken die Zugspannungen der äußeren Lage einem von innen auf das Spaltrohr wirkenden Fluiddruck entgegen. Das heißt, bei der erfindungsgemäßen Ausgestaltung des Spaltrohres sind die Spannungen in äußerer und innerer Lage genau umgekehrt zueinander gerichtet, wie es bei einem Spaltrohr der Fall währe, bei welchem das Material der äußeren Lage nicht entsprechend dehnbar ausgebildet ist.

Weiter bevorzugt weist die äußere Lage zumindest eine Öffnung auf, durch welche der Kunststoff von der Außenseite der äußeren Lage her in deren Inneres gespritzt ist. Dies begünstigt die Fertigung des Spaltrohres, da das Kunststoffmaterial der inneren Lage von außen in das Innere der äußeren Lage gespritzt werden kann. Bevorzugt ist die hierzu erforderliche Öffnung zentral im Boden des Spaltrohres angeordnet. Der Boden des Spaltrohres ist dabei der geschlossene Teil des topfförmigen Spaltrohres an demjenigen Axialende, welches einem anzutreibenden Laufrad einer Pumpe abgewandt ist.

Der Kunststoff, aus welchem die innere Lage des Spaltrohres gefertigt ist, enthält vorzugsweise ein Thermoplast. Dies kann z. B. Polyphenylensulfid (PPS) oder Polypropylen (PP) oder ein anderes geeignetes Polymer sein. Darüber hinaus ist der Kunststoff faserverstärkt. Dabei enthält der Kunststoff Fasern, welche dem Kunststoff vor dem Einspritzen in ein Spritzgusswerkzeug zugemischt sind und in dem Kunststoff verteilt sind. Die Fasern können beispielsweise Carbonfasern, Glasfasern, Metallfasern und/oder Aramidfasern sowie andere geeignete Fasern sein. Auch Naturfasern, wie z.B. Hanf, Baumwolle oder Seide können Verwendung finden.

Diese Fasern in dem Kunststoff der inneren Lage sind vorzugsweise definiert orientiert. Beispielsweise können die Fasern zumindest in einzelnen Schichten der inneren Lage in Umfangsrichtung ausgerichtet sein, um in dieser Richtung Zugkräfte aufnehmen zu können und zu einer definierten Verstärkung des Spaltrohres zu führen. Eine solche Orientierung kann durch eine spezielle Vorgehensweise beim Spritzgießen der inneren Lage erreicht werden, wie weiter unten beschrieben werden wird.

Besonders bevorzugt weist die innere Lage mehrere Schichten auf, in welchen in dem Kunststoff vorhandene Fasern unterschiedlich definiert orientiert sind. Diese Schichten liegen in radialer Richtung übereinander. Beispielsweise kann die innere Lage eine radial innere und eine radial äußere Randzone aufweisen, in welcher die Fasern axial, d. h. parallel zur Längsachse des Spaltrohres orientiert sind. In einer zwischen diesen Randzonen gelegenen Mittelschicht sind die Fasern vorzugsweise in Umfangsrichtung bezüglich der Längsachse des Spaltrohres orientiert. Dabei ist es bevorzugt, dass sich diese Mittelschicht in radialer Richtung bezogen auf die Längsachse des Spaltrohres über 60 % oder mehr der Dicke der inneren Lage erstreckt. Durch entsprechende Einstellung des Spritzgussprozesses kann jedoch auch eine Ausgestaltung erreicht werden, bei welcher nur eine Randschicht oder auch keine Randschicht vorgesehen ist, sodass in einem größeren Teil der Wandstärke eine einheitliche Orientierung der Fasern, insbesondere in umfänglicher Richtung erreicht werden kann.

Das vorgespannte Material der äußeren Lage enthält vorzugsweise thermoplastische Fasern, Carbonfasern, Glasfasern, Metallfasern und/oder Aramidfasern. Darüber hinaus können auch andere geeignete Fasern zum Einsatz kommen. Beispielsweise können auch Naturfasern wie Hanf, Baumwolle oder Seide verwendet werden. Die bevorzugte elastische Dehnbarkeit kann entweder dadurch erreicht werden, dass die Fasern selber in ihrer Längsrichtung entsprechend dehnbar sind oder aber, dass die Fasern zu einem Gewebe in der Weise verarbeitet sind, dass das Gewebe die gewünschte Dehnbarkeit, insbesondere in umfänglicher Richtung des Spaltrohres aufweist, ohne das die Fasern selber eine solche Dehnbarkeit aufweisen.

Gemäß einer weiteren bevorzugten Ausführungsform kann in dem Kunststoff der inneren Lage ein Lager oder ein Lagerhalter eingegossen sein. Dieses Lager dient der Lagerung der Rotorwelle in dem Spaltrohr und kann insbesondere ein Gleitlager sein. Entweder kann das Lager direkt in das Kunststoffmaterial eingegossen sein oder in das Kunststoffmaterial ist ein Lagerhalter eingegossen, in welchem später das Lager fixiert wird.

Um eine feste Verbindung zwischen Lager bzw. Lagerhalter und dem umgebenen Kunststoff zu erreichen, kann die dem Kunststoff zugewandte Oberfläche des Lagers bzw. Lagerhalters strukturiert ausgebildet sein, d. h. Vertiefungen, Löcher und/oder Vorsprünge bzw. Auskragungen aufweisen, sodass ein Formschluss zwischen Kunststoff und Lager- bzw. Lagerhalteroberfläche erreicht werden kann. Dieser Formschluss wird vorzugsweise in axialer wie auch in umfänglicher Richtung erreicht. Die Strukturierung kann als Mikrostrukturierung, jedoch auch als Makrostrukturierung ausgebildet sein. Beispielsweise kann das Lager oder der Lagerhalter auch konisch ausgebildet sein, wobei das Ende mit größerem Durchmesser dann dem Innenraum des Spaltrohres abgewandt angeordnet wird. Darüber hinaus kann der Außenumfang des Lagers bzw. Lagerhalters nicht rotationssymmetrisch ausgebildet sein, sodass auch in Umfangsrichtung eine formschlüssige Verbindung in dem Kunststoff erreicht wird.

Die Erfindung betrifft ferner ein Verfahren zum Herstellen eines Spaltrohres eines Antriebsmotors für ein Pumpenaggregat, insbesondere für ein Heizungspumpenaggregat. Das Verfahren dient zum Herstellen eines Spaltrohres, welches zumindest teilweise aus Kunststoff gefertigt ist, wie es oben beschrieben wurde. Erfindungsgemäß weist das Verfahren die nachfolgend erläuterten wesentlichen Schritte auf.

Zunächst wird eine äußere Lage aus einem elastisch dehnbaren Material in ein Spritzgusswerkzeug eingelegt. Das Spritzgusswerkzeug weist zumindest ein inneres und ein äußeres Formteil auf, wobei im geschlossenen Zustand ein zylindrischer, insbesondere topfförmiger Spalt zwischen innerem und äußerem Formteil verbleibt, welcher der Form des zu fertigenden Spaltrohres entspricht. Die äußere Lage aus dehnbarem Material wird in das Spritzgusswerkzeug in den beschriebenen Spalt zwischen innerem und äußerem Formteil eingelegt. Anschließend wird flüssiger Kunststoff in den Spalt eingebracht bzw. eingespritzt. Dabei wird der flüssige Kunststoff in den Freiraum zwischen dem inneren und dem äußeren Formwerkzeug in der Weise eingespritzt, dass der Kunststoff zwischen der Außenseite des inneren Formwerkzeuges und der äußeren Lage eingebracht wird. Das heißt die äußere Lage wird dabei durch den eingebrachten Kunststoff gegen die Innenwandung des äußeren Formteiles gedrückt. Durch das Einbringen des Kunststoffes in das Innere der äußeren Lage wird die äußere Lage insbesondere in Umfangsrichtung gedehnt, sodass in diese Richtung eine Zugspannung entsteht. Wenn anschließend der Kunststoff in dem Spritzgusswerkzeug erstarrt, schrumpft der Kunststoff der inneren Lage und die äußere Lage kann sich aufgrund ihrer elastischen Dehnbarkeit zurückverformen. Dabei kann jedoch eine gewisse Dehnung erhalten bleiben, sodass eine Vorspannung in der äußeren Lage erreicht wird. Anstatt die äußere Lage durch Dehnung aufgrund des eingespritzten Kunststoffes vorzuspannen, kann auch eine Vorspannung in anderer Weise erfolgen, um in der äußeren Lage dauerhaft Zugspannungen zu erzeugen. Aufgrund der Zugspannungen in der äußeren Lage werden nach innen gerichtete Druckkräfte erzeugt, welche die beiden Lagen des Spaltrohres aneinander halten und ggf. auch Druckkräften im Inneren des Spaltrohres entgegenwirken.

Die äußere Lage kann so ausgebildet sein, dass sie sich über die gesamte Kontur des Spaltrohres bzw. Spaltrohrtopfes erstreckt. Alternativ ist es auch möglich, dass die äußere Lage nur im Bereich des zylindrischen Teils des Spaltrohres, d. h. nicht im Boden des Spaltrohres angeordnet ist.

Bevorzugtes dehnbares Material ist ein Fasermaterial und insbesondere ein Gewebe bzw. enthält ein solches Fasermaterial und insbesondere ein Gewebe. Um eine vorgefertigte Lage zu schaffen, kann das Fasermaterial oder das Gewebe zuvor in ein Kunststoffmaterial eingebettet werden, bzw. das Gewebe oder das Fasermaterial mit einem Kunststoffmaterial getränkt werden. Auch ist eine Formgebung durch Erwärmen und Pressen möglich. Bezüglich der speziellen Ausgestaltung des Fasermaterials oder des Gewebes des dehnbaren Materials wird auf die obige Beschreibung anhand des Spaltrohres verwiesen.

Wie oben bereits anhand des Spaltrohres beschrieben wurde, ist das dehnbare Material vorzugsweise so ausgebildet, dass es beim Einbringen des Kunststoffes gedehnt wird, insbesondere um ein Maß welches gleich oder größer ist als das Maß, um welches der eingebrachte Kunststoff bei seiner Erstarrung schrumpft. Dadurch können eine Vorspannung und die oben anhand des Spaltrohres beschriebenen Vorteile hinsichtlich der Spannungsverteilung im fertigen Spaltrohr erreicht werden.

Gemäß einem bevorzugten Verfahren wird während des Einbringens und/oder Erstarrens des Kunststoffes das innere Formwerkzeug relativ zu dem äußeren Formwerkzeug und/oder relativ zu der äußeren Lage um die Längsachse des zu formenden Spaltrohres gedreht. Hierdurch kann eine spezielle Ausrichtung von Fasern, welche zur Verstärkung in dem Kunststoff der inneren Lage verteilt sind, erreicht werden. Grundsätzlich sind Fasern, welche in dem flüssigen Kunststoff verteilt sind, zunächst überwiegend in der Strömungsrichtung beim Einspritzen des Kunststoffmaterials in das Spritzgusswerkzeug gerichtet. Das heißt, wenn der Kunststoff in axialer Richtung bezogen auf die Längsachse des Spaltrohres in das Spritzgusswerkzeug eingespritzt wird, sind die Fasern z. B. im Wesentlichen auch in axialer Richtung gerichtet. Durch die Rotation kann erreicht werden, dass die Fasern stattdessen in Umfangsrichtung ausgerichtet werden. Bei der relativen Rotation zwischen äußeren und inneren Formteil kann in der inneren Lage dabei in radialer Richtung gesehen ein Mittelbereich entstehen, in welchem die Fasern in Umfangsrichtung des Spaltrohres gerichtet sind. Beiderseits dieses Mittelbereiches gibt es in radialer Richtung gesehen Randzonen, in welchen die Fasern in der Einströmrichtung gerichtet sind, beispielsweise in axialer Richtung. Durch andere Einstellung des Prozesses können jedoch auch Ausgestaltungen erreicht werden, in denen nur eine Randzone oder auch keine Randzone vorhanden ist. Dies kann durch Beheizen der Formteile des Spritzgusswerkzeuges erreicht werden, oder aber auch dadurch, dass die Drehung bzw. Rotation bereits während des Einspritzens einsetzt. Dadurch kann verhindert werden, dass der Kunststoff an der Oberfläche der Formteile in der durch die Einströmrichtung vorgegebenen Ausrichtung erstarrt. Insbesondere, wenn die Rotation erst kurz nach Ende des Einspritzvorganges durchgeführt wird, kann es zu einer solchen Erstarrung an den Oberflächen der Formteile kommen, wodurch die oben beschriebenen Randzonen ausgebildet werden.

Die äußere Lage aus dem dehnbaren Material ist vorzugsweise nach dem Einlegen in das Spritzgusswerkzeug relativ zu dem äußeren Formteil fixiert, sodass die Drehung des inneren Formteiles relativ zu der äußeren Lage erfolgt. Durch die umfängliche Ausrichtung der Fasern in dem Kunststoffmaterial der inneren Lage wird eine Verstärkung in Umfangsrichtung erreicht.

Bevorzugt fließt der Kunststoff, wie vorangehend beschrieben, zwischen innerem Formwerkzeug und äußerer Lage beim Einspritzen im Wesentlichen parallel zu der Längsachse des zu formenden Spaltrohres. Dadurch werden Fasern, welche in dem Kunststoffmaterial vorhanden sind, wie beschrieben zunächst axial ausgerichtet. Durch Rotation kann dann die gewünschte andere Ausrichtung erreicht werden.

Das Einspritzen des Kunststoffs in das Innere der äußeren Lage, d. h. in den von der äußeren Lage begrenzten Innenraum, kann von einer axialen, geschlossenen Stirnseite des zu formenden Spaltrohres her oder von einer axialen offenen Stirnseite des zu formenden Spaltrohres her erfolgen. Die geschlossene axiale Stirnseite des Spaltrohres ist die Stirnseite, welche den Boden des Spaltrohrtopfes bildet, welcher an dem dem Laufrad der Pumpe abgewandten Ende des Spaltrohres gelegen ist. Die offene Stirnseite des Spaltrohres ist die, welche dem Laufrad der Pumpe zugewandt ist. Wenn der Kunststoff von der Bodenseite des Spaltrohrtopfes her eingespritzt wird, erfolgt das Einspritzen vorzugsweise zentral in dem Boden, sodass das Kunststoffmaterial im Boden vom Zentrum her in radialer Richtung fließt und dann vom Umfang des Bodens her in axialer Richtung durch den zylindrischen Formbereich zwischen innerem und äußerem Formteil strömt.

Alternativ oder zusätzlich ist es möglich, dass der Kunststoff in das Innere der äußeren Lage an zumindest einer Position zwischen den beiden Axialenden des zu formenden Spaltrohres eingespritzt wird. Hierzu können entweder im inneren oder im äußeren Formteil eine oder mehrere Einspritzöffnungen vorgesehen sein, durch welche der Kunststoff in den Freiraum zwischen der äußeren Materiallage und der Oberfläche des inneren Formwerkzeuges strömt. Ausgehend von der Einspritzöffnung strömt der Kunststoff dann im Wesentlichen in axialer Richtung des Spaltrohres zu den beiden axialen Stirnseiten hin.

Wenn der Kunststoff in das Innere der äußeren Lage, d. h. den von der äußeren Lage begrenzten Raum, von außen her, d. h. von dem äußeren Formteil des Spritzgusswerkzeuges her eingespritzt werden soll, ist es zweckmäßig, dass der Kunststoff in das Innere der äußeren Lage durch zumindest eine in der äußeren Lage ausgebildete Öffnung eingebracht wird, welche vorzugsweise an einer Position zentral am Boden des zu formenden topfförmigen Spaltrohres ausgebildet ist. Durch die eine oder mehrere Öffnungen in der äußeren Lage aus dehnbarem Material strömt der Kunststoff dann in den Freiraum bzw. Spalt zwischen der äußeren Materiallage und der Außenfläche des inneren Formteils.
Der Kunststoff der inneren Lage kann ein homogenes Kunststoffmaterial oder aber auch Kunstoff-Komposit-Material sein, in welchem verschiedene Kunststoffe miteinander oder auch andere Materialien mit dem Kunststoff verbunden sind. Wie beschrieben können in dem Kunststoff der inneren Materiallage z. B. Fasern zur Verstärkung eingesetzt werden. Diese werden bevorzugt durch Rotation der Formteile zueinander definiert ausgerichtet. Diese Fasern sind zweckmäßigerweise erheblich kürzer als die Fasern in der äußeren Lage.

Die äußere Lage wird vor dem Einsetzen in das Spritzgusswerkzeug vorzugsweise in eine Form gebracht, welche im Wesentlichen der Form des zu formenden Spaltrohres entspricht. Dabei wird der äußeren Lage bevorzugt eine gewisse Formstabilität gegeben, damit sie leicht in das Spritzgusswerkzeug eingesetzt werden kann. Dazu können die Fasern oder das Gewebe beispielsweise in ein Kunststoffmaterial eingebettet sein, was durch Tränken oder Umspritzen des Faser- oder Gewebematerials erfolgen kann. Dabei ist darauf zu achten, dass das Kunststoffmaterial, welches die Fasern oder das Gewebe umgibt die erforderliche elastische Dehnbarkeit aufweist, um die oben beschriebenen Effekte aufgrund der Elastizität der äußeren Lage sicherstellen zu können.

Um ein Lager oder einen Lagerhalter in das zumindest teilweise aus Kunststoff ausgebildete Spaltrohr direkt eingießen zu können, kann in das Spritzgusswerkzeug vor dem Einbringen des flüssigen Kunststoffes ein Lager oder Lagerhalter an vorbestimmter Position eingelegt werden. Hierzu kann beispielsweise an dem inneren Formwerkzeug eine Aufnahme in Form einer Ausnehmung ausgebildet sein, in welche das Lager oder der Lagerhalter eingelegt wird und an definierter Position gehalten wird. Dabei verbleibt zwischen dem Außenumfang des Lagers oder Lagerhalters und dem inneren Formwerkzeug vorzugsweise zumindest abschnittsweise ein Spalt, in welchen das Kunststoffmaterial strömen kann. Wie oben beschrieben kann die Oberfläche des Lagers oder Lagerhalters makro- oder mikrostrukturiert sein, um eine bessere Verbindung zwischen Kunststoff und Lager bzw. Lagerhalter zu erreichen.

Gemäß einer weiteren speziellen Ausführungsform des Verfahrens weist das Spritzgusswerkzeug, in welchem das Spaltrohr ausgebildet wird, einen Spalt auf, welcher zur Ausbildung eines sich radial erstreckenden Kragens an dem offenen Ende des zu fertigenden Spaltrohres ausgebildet ist. Während des Erstarrens des Kunststoffes, welcher in das Spritzgusswerkzeug und somit auch in diesen Spalt eingespritzt ist, wird auf zumindest eine der diesen Spalt definierenden Wandungen des Spritzgusswerkzeuges ein zu der gegenüberliegenden Wandung des Spaltes hin gerichteter Druck aufgebracht. D. h. der Spalt wird in seiner Breite durch Aufeinanderzubewegen der Wandungen verengt. Vorzugsweise weist das Werkzeug dazu eine Bodenplatte auf, welche dem äußeren Formteil gegenüber liegt. Diese Bodenplatte ist von dem äußeren Formteil beabstandet, um den Spalt zum Ausbilden des Kragens zu definieren. Während des Erstarrens wird die Bodenplatte auf das äußere Formteil zubewegt, so dass der Spalt verkleinert wird. Dieses Verfahren ist insbesondere dann von Vorteil, wenn der Spalt eine größere Breite aufweist, als der Spalt zwischen äußerem und innerem Formteil, welcher die Umfangswandung des zu fertigen Spaltrohres definiert. Auf diese Weise wird es möglich, ein Spaltrohr mit einer sehr dünnen Umfangswandung zu fertigen, welches jedoch an seinem offenen Stirnende einen Kragen von größerer Materialdicke aufweist. Durch das Aufbringen einer Druckkraft auf die Wandung des den Kragen formenden Spaltes bzw. durch Verkleinern der Spaltbreite während des Erstarrens wird verhindert, dass sich in diesem Bereich beim Erstarren Lunker oder ähnliche Hohlräume aufgrund der Schrumpfung des Kunststoffes bilden können.

Nachfolgend wird die Erfindung beispielhaft anhand der beigefügten Figuren beschrieben. In diesen zeigt:
- Fig. 1: das Zusammensetzen einer äußeren Lage mit dem inneren Formteil einer Spritzgussform,
- Fig. 2a bis 2d: schematisch den Spritzgießvorgang eine Spaltrohres gemäß der Erfindung,
- Fig. 3a: schematisch die Spannungen in der Spaltrohrwandung in dem Falle, dass die äußere Lage nicht gedehnt würde,
- Fig. 3b: die Spannung in der Wandung des Spaltrohres bei Ausgestaltung gemäß der Erfindung,
- Fig. 4: eine schematische Schnittansicht eines Spritzgusswerkzeuges gemäß einer ersten Ausführungsform zur Herstellung eines Spaltrohres gemäß der Erfindung,
- Fig. 5: eine schematische Schnittansicht eines Spritzgusswerkzeuges gemäß einer zweiten Ausführungsform zum Herstellen eines Spaltrohres gemäß der Erfindung,
- Fig. 6: eine schematische Schnittansicht der inneren Lage der Umfangswandung eines erfindungsgemäß ausgebildeten Spaltrohres gemäß einer speziellen Ausführungsform der Erfindung,
- Fig. 7a bis 7d: schematisch die Herstellung der äußeren Lage aus einem elastisch dehnbaren Material,
- Fig. 8a bis 8c: schematisch drei weitere Fertigungsschritte zur Herstellung der äußeren Lage aus elastisch dehnbarem Material,
- Fig. 9: eine schematische Schnittansicht eines Spaltrohres gemäß der Erfindung,
- Fig. 10: eine schematische Schnittansicht eines Spaltrohres gemäß einer weiteren Ausführungsform der Erfindung,
- Fig. 11: schematisch das Aufsetzen einer äußeren Lage aus elastischem Material auf ein inneres Formteil eines Spritzgusswerkzeuges gemäß einer Variante des erfindungsgemäßen Verfahrens und
- Fig. 12a bis 12d: schematisch die Fertigung eines erfindungsgemäßen Spaltrohres gemäß einer besonderen Ausführungsform der Erfindung.

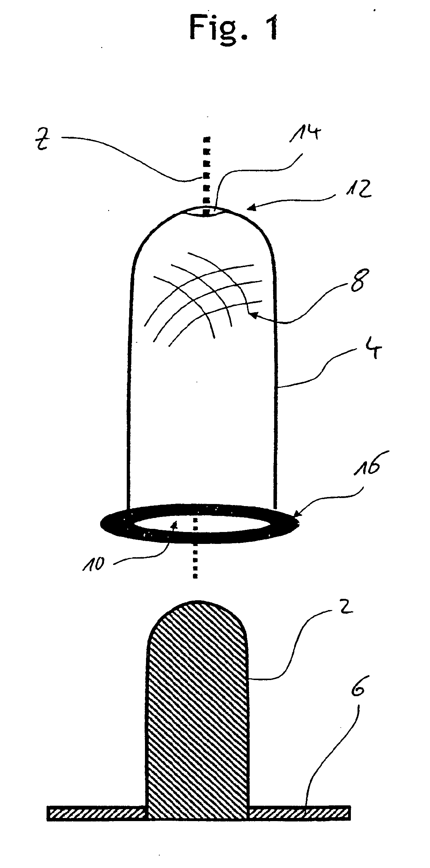

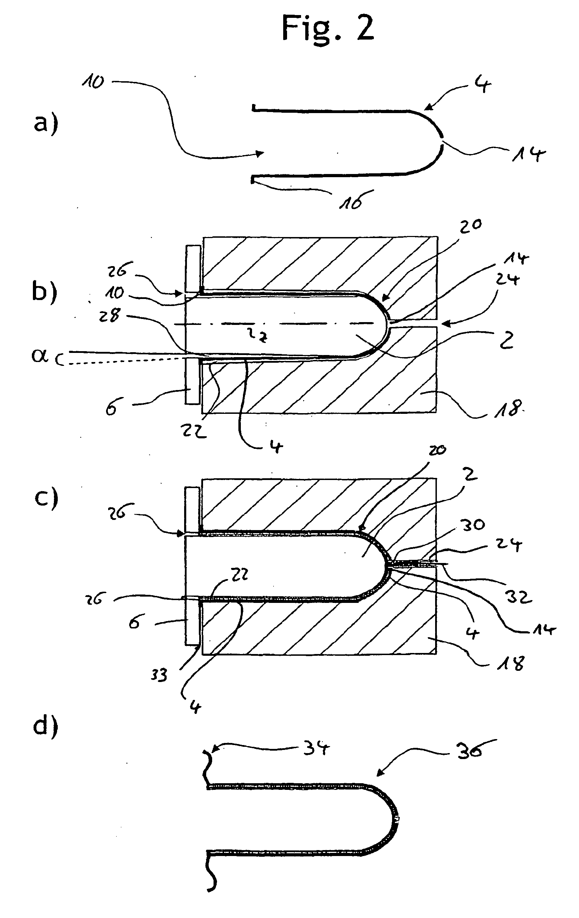

Anhand der Figuren 1 und 2 wird die grundsätzliche Vorgehensweise zur Fertigung des erfindungsgemäßen Spaltrohres beschrieben. Zunächst wird auf ein inneres Formteil 2 eine vorgefertigte Struktur, welche die äußere Lage 4 des erfindungsgemäßen Spaltrohres bildet, aufgesetzt.

Das innere Formteil 2 ist an einer Basisplatte 6 angebracht und weist eine äußere Form auf, welche der inneren Form des zu bildenden Spaltrohres entspricht. Die äußere Lage 4 ist topf- bzw. haubenförmig im Wesentlichen in Form des zu fertigenden Spaltrohres vorgefertigt. Dabei besteht die äußere Lage aus einem Geflecht bzw. Gewebe von Fasern 8, insbesondere kontinuierlichen, d. h, sehr langen Fasern 8. Die äußere Lage ist an ihrem einen Längsende 10 in Richtung der Spaltrohr bzw. Pumpenlängsachse Z offen ausgebildet. Dieses Längsende ist das offene Längsende des zu fertigenden Spaltrohres. Am entgegengesetzten zweiten Längsende 12 ist die äußere Materiallage wie auch das zu fertigende Spaltrohr geschlossen ausgebildet. Hier ist ein gewölbter Boden vorgesehen welcher die ansonsten im wesentlichen kreiszylindrisch ausgebildete äußere Lage 4 am Ende 12 verschließt. Zentral im Boden am zweiten Längsende 12 ist eine Öffnung 14 ausgebildet, welche sich von außen in das Innere der äußeren Lage 4 erstreckt. Am entgegengesetzten Längsende 10 ist am äußeren Umfang der äußeren Lage 4 ein Kragen 16 ausgebildet, welcher sich radial nach außen erstreckt und, wenn die äußere Lage 4 auf das innere Formteil 2 aufgesetzt ist, an dessen Basisplatte 6 zur Anlage kommt.

Die äußere Lage 4, wie sie in Figur 1 gezeigt ist, ist elastisch dehnbar ausgebildet, insbesondere in radialer bzw. umfänglicher Richtung bezüglich der Längsachse Z. Dadurch kann eine Vorspannung in der äußeren Lage erzeugt werden.

Figuren 2a bis 2d zeigen den schrittweisen Ablauf des Gießens des Spaltrohres. Figur 2a zeigt zunächst die vorgefertigte äußere Lage 4 aus einem elastischen, dehnbaren Material, insbesondere einem dehnbaren Gewebe. Wie anhand von Figur 1 beschrieben, wird diese äußere Lage 4 zunächst auf das innere Formteil 2 eines Spritzgusswerkzeuges aufgesetzt. Anschließend wird das innere Formteil 2 mit einem äußeren Formteil 18 zusammengesetzt. Das äußere Formteil 18 des Spritzgusswerkzeuges weist im Inneren eine Ausnehmung 20 auf, welche in ihrer Innenkontur der Außenkontur des zu formenden Spaltrohres entspricht. Die Innenkontur der Ausnehmung 20 ist größer als die Außenkontur des inneren Formteils 4, sodass zwischen dem inneren Formteil 4 und dem äußeren Formteil 18 ein Spalt 22 gebildet wird, welcher in seiner Dimension der zu formenden Wandung des Spaltrohres entspricht. In diesen Spalt 22 ist die vorgefertigte äußere Lage 4 eingelegt.

Wie zu erkennen ist, ist die Stärke der äußeren Lage 4 in radialer Richtung bezogen auf die Längsachse Z geringer als die Breite des Spaltes 22. Dabei liegt die äußere Lage 4 zunächst nicht überall an der Innenwandung der Ausnehmung 20 an, sondern ist von dieser beabstandet. Dies gilt insbesondere für den zylindrischen Abschnitt des zu formenden Spaltrohres. Die Öffnung 14 an der geschlossenen Seite 12 der äußeren Lage 4 liegt eine Einspritzöffnung 24 zum Einspritzen des Kunststoffes in das Spritzgusswerkzeug gegenüber. Wie ferner in Figur 2b zu erkennen ist, ist der an das erste Längsende 10 angrenzende Bereich der äußeren Lage 4 nicht ganz zylindrisch ausgebildet, sondern weitet sich um einen Winkel α zu dem Längsende 10 hin auf. Dadurch wird erreicht, dass am Längsende 10 die äußere Lage 4 nicht an der Außenwandung des inneren Formteiles 2 anliegt. An dem Längsende 10 liegt die äußere Lage mit einem sich radial nach außen erstreckenden Kragen an dem äußeren Formteil 18 an, wodurch verhindert werden kann, dass an diesem Ende der eingespritzte Kunststoff um die äußere Lage 4 herum fließt und in den Bereich des Spaltes 22 zwischen der äußeren Lage 4 und der Innenwandung der Ausnehmung 20 gelangt. Die Außenkontur des inneren Formteils 2 direkt umgebend sind in der Basisplatte 6 Entlüftungsöffnungen 26 ausgebildet, welche zu dem aufgrund des Winkels α zwischen der äußeren Lage 2 und der Außenwandung des inneren Formteils 2 gebildeten Spalt 28 hin geöffnet sind.

Wie in Figur 2c dargestellt ist, wird der flüssige Kunststoff 30 in der durch Pfeil 32 angedeuteten Fliesrichtung durch die Einspritzöffnung 24 in das Innere der Ausnehmung 20 des äußeren Formwerkzeuges 18 gespritzt.

Dabei strömt der flüssige Kunststoff 30 durch die Öffnung 14 in der äußeren Lage 4 in den Spalt 28 zwischen der äußeren Lage 4 und der Außenwandung des inneren Formteils 2. Durch den Druck des einströmenden Kunststoffes 30 wird die äußere Lage 4 so gedehnt und nach außen gedrückt, dass sie an der Innenseite der Ausnehmung 20 des äußeren Formteils 18 zur Anlage kommt. Der Spalt 22 zwischen der äußeren Lage 4 und der Außenfläche des inneren Formteils 2 wird dabei vollständig mit Kunststoff 30 gefüllt. Die zuvor in diesem Spalt vorhandene Luft kann durch die Entlüftungsöffnungen 26 entweichen. Die äußere Lage 4 liegt am Umfang der Öffnung 14 an der Innenwandung der Ausnehmung 20 an, sodass hier ein Eindringen des Kunststoffes 30 in den Bereich zwischen Innenwandung der Ausnehmung 20 und äußerer Lage 4 verhindert wird.

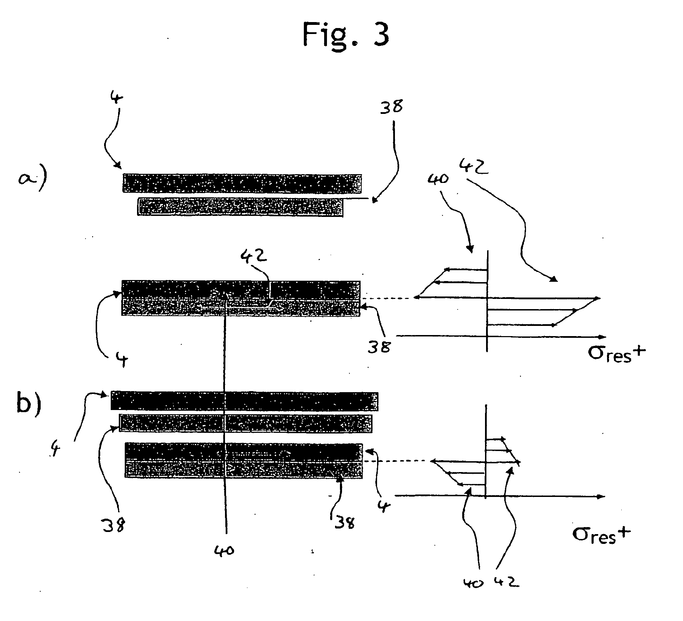

Zwischen dem äußeren Formteil 18 und der Basisplatte 6 des inneren Formteils 2 ist ein Spalt 33 vorgesehen, welcher dazu genutzt wird, einen Kragen 34 an dem Spaltrohr 36 auszubilden. Das fertige Spaltrohr, welches aus dem Spritzgusswerkzeug entnommen worden ist, ist in Figur 2d gezeigt. Durch die Kombination eines Kunststoffmaterials 30 und der äußeren Lage 4 in Form eines dehnbaren Gewebes kann ein sehr dünnes festes Spaltrohr geschaffen werden. Wesentlich ist dabei, dass durch die Dehnbarkeit des Materials der äußeren Lage 4 eine vorteilhafte Spannungsverteilung in der Wandung des Spaltrohres 36 erreicht wird, wie anhand von Figur 3 näher erläutert wird.

Um im Bereich des Kragens 34 eine ausreichende Dichte des Materials zu erzielen und insbesondere Lunker aufgrund der Schrumpfung des Kunststoffes 30 beim Erstarren zu vermeiden, wird über die Basisplatte 6 bevorzugt ein Druck in Richtung auf das äußere Formteil bzw. Formwerkzeug 18 ausgeübt, wodurch der Spalt 33 verkleinert wird. Dies ermöglicht es, den Spalt 33 insgesamt mit größerer Dicke auszubilden als den Spalt zwischen innerem Formteil 4 und äußerem Formteil 18, welcher die Umfangswandung des Spaltrohres definiert. So wird es möglich, ein Spaltrohr mit sehr dünner Umfangswandung und gleichzeitig dickerem Kragen 34 auszubilden. Die aufgrund der Materialansammlung im Kragen 34 auftretende verzögerte Erstarrung und stärkere Schrumpfung können durch das Bewegen der Basisplatte 6 kompensiert wird.

In Figur 3a ist zunächst die Situation gezeigt, in welcher keine Dehnung der äußeren Lage 4 stattfindet. Oben in Figur 3a sind die äußere Lage 4 und die innere Lage 38, welche aus dem Kunststoff 30 geformt wird, getrennt voneinander dargestellt. Zu erkennen ist, dass die innere Lage 38 bei der Erstattung geschrumpft ist gegenüber der äußeren Lage 4. Wenn die äußere Lage 4 und die innere Lage 38 fest miteinander verbunden sind, wie in Figur 3a unten gezeigt ist, führt dies dazu, dass aufgrund der Schrumpfung die innere Lage 38 Zugspannungen 40 und die äußere Lage 4 Druckspannungen 42 ausgesetzt ist. Dies führt dazu, dass die miteinander verbundene äußere Lage 4 und die innere Lage 38 dazu streben, sich voneinander zu trennen, bzw. zu delaminieren.

Figur 3b zeigt nun die erfindungsgemäße Ausgestaltung, gemäß derer die äußere Lage 4 elastisch dehnbar ausgebildet ist. Dabei ist die äußere Lage 4 derart dehnbar, dass sie um ein größeres Maß dehnbar ist, als der Kunststoff 30 der inneren Lage 38 bei der Erstarrung schrumpft. In Figur 3b oben sind zunächst schematisch die äußere Lage 4 und die innere Lage 38 im nicht miteinander verbundenen Zustand gezeigt. In Figur 3b unten sind die beiden Lagen 4, 38 im verbundenen Zustand gezeigt. Beim Einspritzen des Kunststoffes 30 wird die äußere Lage 4 zunächst elastisch gedehnt. Dabei wird sie stärker gedehnt, als der Kunststoff 30 später bei der Erstarrung schrumpft. Wenn nun der Kunststoff 30 schrumpft und erstarrt, führt dies dazu, dass die äußere Lage 4 eine gewisse Vorspannung behält. Insgesamt wird dadurch erreicht, dass die äußere Lage 4 im erstarrten Zustand Zugspannungen 42 ausgesetzt ist, während die innere Lage 38 im erstarrten Zustand Druckspannungen 40 ausgesetzt ist. Diese Spannungen bewirken, dass die äußere Lage 4 und die innere Lage 38 in radialer Richtung bezogen auf die Längsachse Z gegeneinander gepresst werden und im verbundenen Zustand gehalten werden. Darüber hinaus können die Zugspannungen in der äußeren Lage 4 im Inneren des Spaltrohres auftretenden Drücken entgegenwirken. Auf diese Weise wird eine erhöhte Stabilität des Spaltrohres 36 erreicht, ohne dessen Wandstärke erhöhen zu müssen. Darüber hinaus kann durch die Vorspannung der äußeren Lage 4 verhindert werden, dass sich in der inneren Lage Risse bilden, dadurch wird die Dichtigkeit des Spaltrohres verbessert.

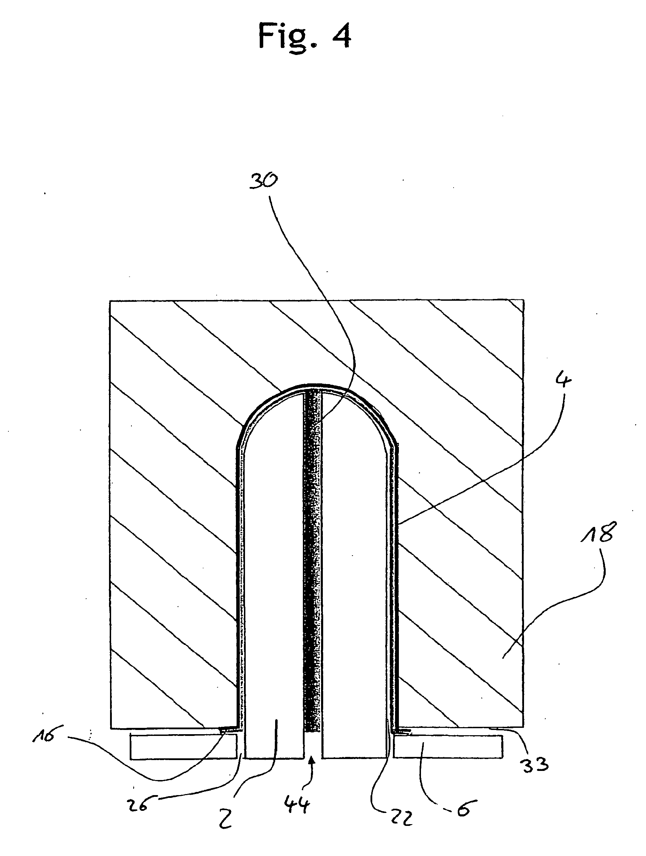

Figur 4 zeigt ein Spritzgusswerkzeug mit einen innerem Formteil 2 und einen äußerem Formteil 18 entsprechend der Ansicht in Figur 2c mit eingespritztem Kunststoff 30. Im Unterschied zu der Ausführungsform gemäß Figur 2 wird bei der Ausführungsform gemäß Figur 4 der Kunststoff 30 nicht durch eine Öffnung 14 in der äußeren Lage 4 in den Spalt 22 eingespritzt, sondern durch einen Kanal 44, welcher sich in Längsrichtung durch das innere Formteil 2 erstreckt, in den Spalt 22 eingeleitet. Der Kanal 44 erstreckt sich dabei ausgehend von dem der Basisplatte 6 zugewandten Längsende des inneren Formteils 2 zu dem entgegengesetzten Ende des Formteils 2, welches den Boden des Spaltrohres ausformt. Der Kunststoff 30 wird somit zunächst in diesen Bodenbereich eingeleitet, wie es auch bei der Ausführungsform gemäß Figur 2c der Fall der Fall ist, mit dem Unterschied, dass der Kunststoff 30 direkt von der Innenseite her in das Innere der äußeren Lage 4 gespritzt wird. Eine Öffnung 14 in der äußeren Lage 4 ist daher bei dieser Ausführungsform nicht vorgesehen.

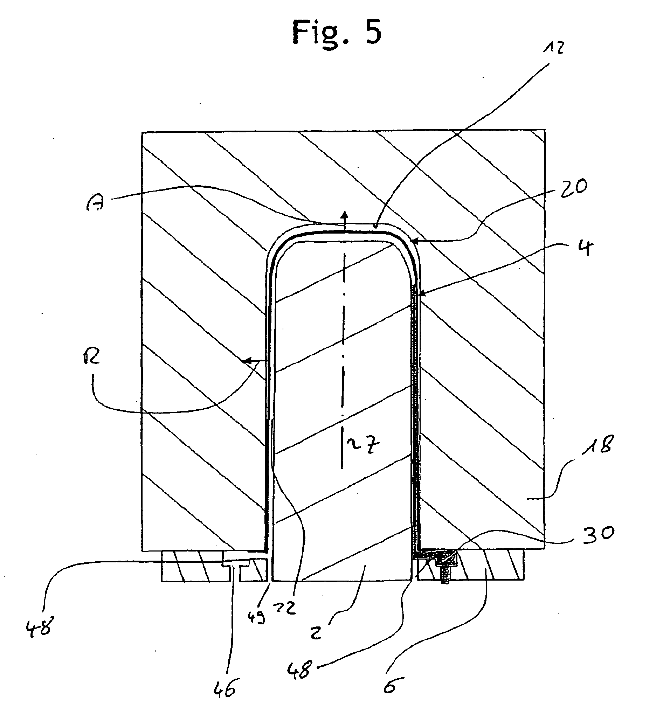

Figur 5 zeigt eine weitere Ausführungsform eines Spritzgusswerkzeuges mit einem äußeren Formteil 18 und einem Inneren Formteil 2 ähnlich den Ansichten in Figur 2c und Figur 4. Im Unterschied zu den anhand von Figur 2c und Figur 4 gezeigten Verfahrensabläufen zum Einspritzen des Kunststoffes 30 wird bei der Ausführungsform gemäß Figur 5 der Kunststoff 30 von dem offenen Ende des zu formenden Spaltrohres, d. h. von der Basisplatte 6 des inneren Formteils 2 her in den Spalt 22 eingespritzt. Dazu sind in der Basisplatte 6 Einspritzöffnungen 46 ausgebildet, welche mit einem ringförmigen Spalt 48 verbunden sind, welcher zwischen der Stirnseite des äußeren Formteils 18 und der Basisplatte 6 ausgebildet ist und sich normal zu dem Spalt 22 erstreckt und einen Kragen 34 an dem Spaltrohr 36 ausbildet. Bei dieser Ausführungsform ist darüber hinaus die äußere Lage 4 so ausgebildet, dass sie etwas kürzer als die Ausnehmung 20 in dem äußeren Formteil 18 in Richtung der Längsachse Z ist. Das heißt, der Boden der äußeren Lage 4 an deren ersten Längsende 12 liegt in der Ausgangslage nicht am Boden der Ausnehmung 20 an sondern ist von diesem beabstandet. Dadurch wird erreicht, dass beim Einspritzen des Kunststoffmaterials 30 die äußere Lage 4 nicht nur in der radialen Richtung R sondern auch in der axialen Richtung A gedehnt wird. Dabei erfolgt auch hier die Dehnung wie anhand von Figur 3 näher erläutert, sodass es zu der günstigen Spannungsverteilung in der Wandung des Spaltrohres 36 kommt. Durch die Dehnung, wie Sie bei der Ausführungsform gemäß Figur 5 vorgesehen ist, wird dabei diese Spannungsverteilung nicht nur in umfänglicher Richtung, sondern auch in axialer Richtung, d. h. parallel zur Längsachse Z in der Wandung des Spaltrohres erzielt.

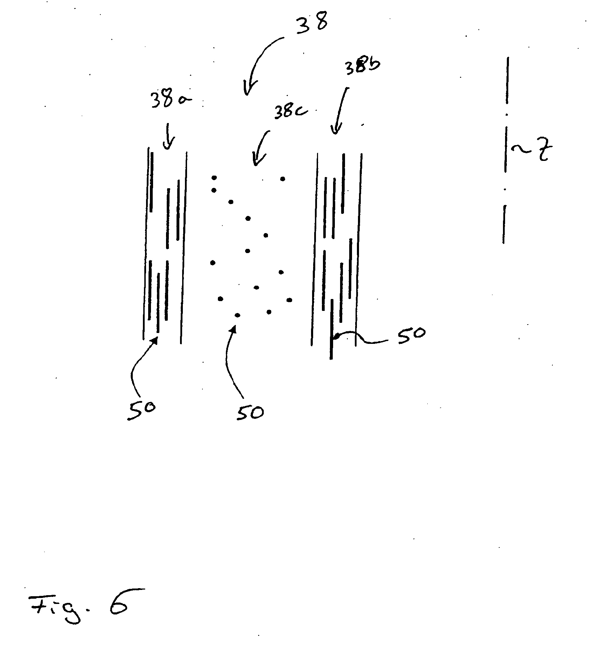

Figur 6 zeigt einen Ausschnitt eines Schnittes durch die innere Lage 38 des Spaltrohres 36, welches in der vorangehenden Weise ausgebildet wurde. Dabei ist eine spezielle Ausführungsform gezeigt. In dieser Ausführungsform wird ein Kunststoff 30 mit darin enthaltenden Fasern 50 zur Verstärkung verwendet. Diese Fasern 50 sind in der Spaltrohrwandung definiert ausgerichtet bzw. orientiert. Die innere Lage 38 weist drei Schichten, nämlich zwei voneinander in radialer Richtung bezüglich der Längsachse Z beabstandete Randzonen 38a und 38b sowie eine dazwischen angeordnete Mittelschicht 38c auf. In den Randzonen 38a und 38b sind die Fasern 50 in axialer Richtung, d. h. parallel zur Längsachse Z ausgerichtet. In der dazwischenliegenden Mittelschicht 38c hingegen sind die Fasern 50 in umfänglicher Richtung bezüglich der Längsachse Z gerichtet. Dadurch wird besonders in umfänglicher Richtung eine Verstärkung des Materials der inneren Lage 38 erreicht. In dieser Richtung treten die größten Belastungen auf, wenn das Innere des Spaltrohres 36 mit Druck beaufschlagt wird. Die mittlere Schicht 38c macht in radialer Richtung bezüglich der Längsachse Z vorzugsweise mehr als 40%, weiter bevorzugt mehr als 60 % der Wandstärke der inneren Lage 38 aus.

Die in Figur 6 gezeigte Orientierung der Fasern 50 wird dadurch erreicht, dass während des Einspritzen des Kunststoffes 30 in den Spalt 28 zwischen der äußeren Lage 4 und der Außenwandung des inneren Formteils 2 das innere Formteil 2 relativ zu dem äußeren Formwerkzeug 18 bzw. der darin angeordneten äußeren Lage 4 um die Längsachse Z gedreht wird. Dadurch kommt es zu der umfänglichen Ausrichtung der Fasern 50 in der mittleren Schicht 38 c. Die Fasern 50 in den Randzonen 38a und 38b sind in der Fließrichtung des Kunststoffes 30 beim Einspritzen in den Spalt gerichtet. Da, wie vorangehend anhand von Figur 2c, Figur 4 und Figur 5 beschrieben, die Fließrichtung in axialer Richtung, d. h. parallel zur Längsachse Z verläuft wird in den Randzonen die Ausrichtung der Fasern 50 auch in dieser Richtung erfolgen. Die Rotation des inneren Formteils 2 relativ zu dem äußeren Formwerkzeug 18 kann prinzipiell bei allen vorangehend beschriebenen Ausführungsformen durchgeführt werden. Bei der Ausführungsform gemäß Figur 4, bei welcher der Kunststoff der inneren Lage 38 durch das innere Formteil 2 eingespritzt wird, kann dazu beispielsweise ein zentraler feststehender Bereich des inneren Formteils 2 ausgebildet werden, durch welchen der Kunststoff zugeführt wird. Um diesen feststehenden Bereich kann konzentrisch ein drehbarer äußerer Teil des inneren Formteils 2 angeordnet werden, welcher mit seiner äußeren Oberfläche dem äußeren Formteil 18 zugewandt ist und den Formspalt definiert. Bei der Ausführungsform gemäß Figur 5 kann ein zusätzlicher Ringspalt 49 vorgesehen sein, welcher die Basisplatte 6 von dem inneren Formteil 2 trennt, sodass das innere Formteil 2 relativ zu der Basisplatte 6 und dem äußeren Formteil 18 gedreht werden kann. Für den Fall, dass eine relative Drehung zwischen innerem Formteil 2 und äußerem Formteil 18 nicht vorgesehen ist, kann jedoch bei der Ausführungsform gemäß Figur 5 die Basisplatte 6 auch fest mit dem inneren Formteil 2 verbunden sein.

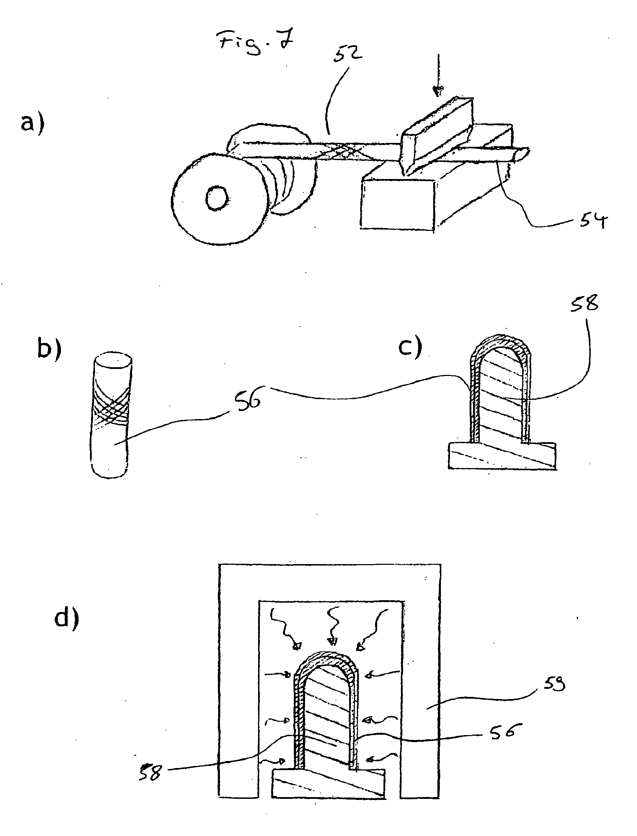

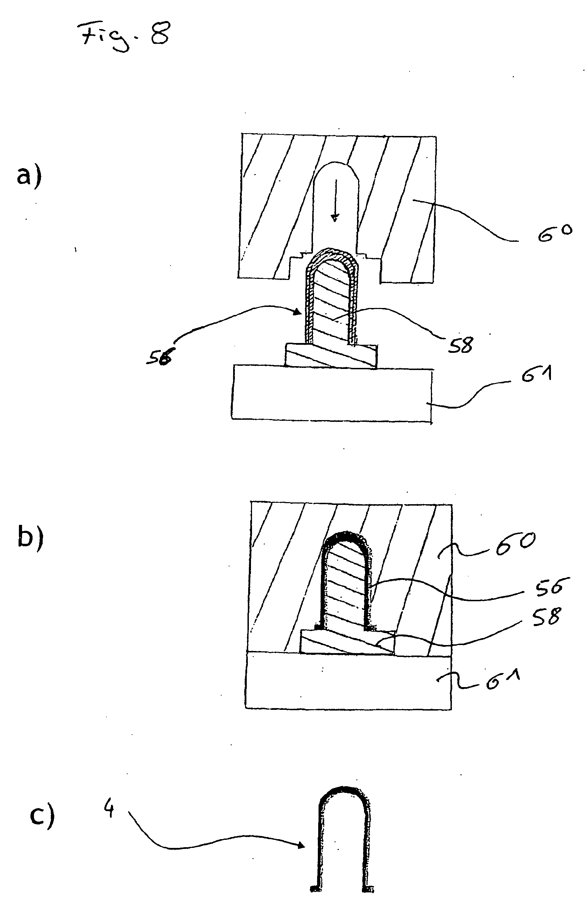

Anhand der Figuren 7a, 7b und 8a bis 8c wird nachfolgend die Fertigung der inneren Lage 4, wie sie in den Spalt 22 zwischen äußerem Formteil 18 und innerem Formteil 2 eingesetzt wird, beschrieben. Zunächst wird von einem langen Gewebeschlauch 52 ein Abschnitt 54 abgeschnitten, wie in Figur 7a gezeigt ist. Dieser Abschnitt wird anschließend in der Mitte um seine Längsachse verdreht und dann umgestülpt, sodass eine zweilagige topfförmige Struktur entsteht, wie sie in Figur 7b gezeigt ist. Diese Gewebestruktur 56 wird über einen Kern 58 gestülpt, welcher die Außenform aufweist, welche der Innenkontur der zu formenden Gewebelage entspricht. Anschließend wird diese Anordnung der Gewebestruktur 56 auf dem Kern 58, wie in Figur 7d gezeigt, durch eine Heizeinrichtung 59 aufgeheizt. Anschließend verbleibt, wie in Figur 8a gezeigt, die Gewebestruktur 56 auf dem Kern 58, welcher auf einer Basisplatt 61 angeordnet wird. Anschließend wird eine Pressform 60, welche in ihrem Inneren eine Ausnehmung aufweist, welche der Außenkontur des zu fertigenden äußeren Lage 4 entspricht aufweist, über die Anordnung von Kern 58 und Gewebestruktur 56 gestülpt und so die Gewebestruktur 56 zwischen Kern 58 und Pressform 60 in Form gepresst, wie in Figur 8b gezeigt. So entsteht auch der Gewebestruktur 56 die äußere Lage 4, welche in Figur 8c gezeigt ist. In der Pressform 60 ist eine Kühleinrichtung zum Abkühlen der Lage 4 angeordnet.

Die äußere Lage 4 erhält ihre Form durch Erwärmen und Verpressen einer Gewebestruktur 56 aus einem Kunststoffgewebe bzw. Kunststofffasern, was das Einsetzen in Spritzgusswerkzeug erleichtert. Dabei weist die äußere Lage 4 anschließend die gewünschte definierte elastische Dehnbarkeit auf. Alternativ oder zusätzlich ist es möglich, die Gewebestruktur 56 noch mit weiterem Kunststoffmaterial zu imprägnieren oder zu tränken.

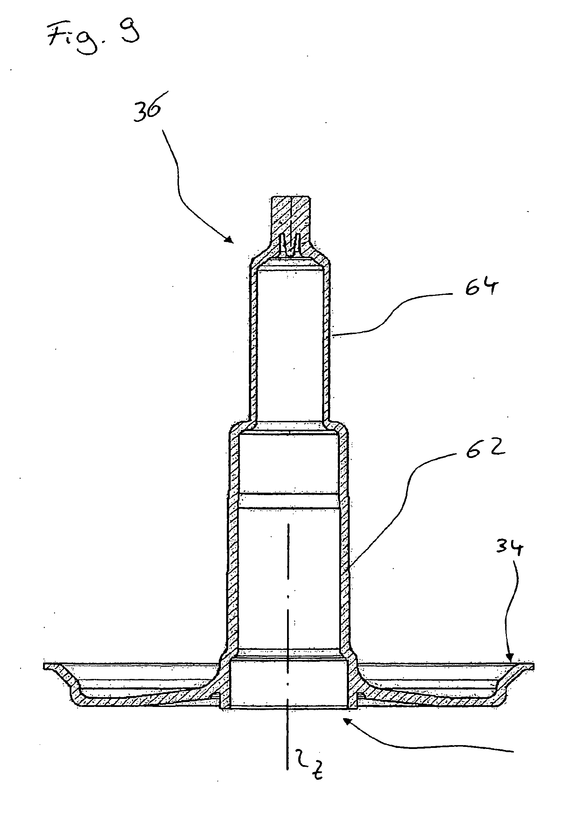

Figur 9 zeigt in einer Schnittansicht ein Beispiel für ein erfindungsgemäß ausgebildetes Spaltrohr 36. In der Schnittansicht gemäß Figur 9 sind die äußere Lage 4 und die innere Lage 38 nicht einzeln dargestellt. Hier ist vereinfacht die Wandung des Spaltrohres 36 als homogenes Material dargestellt. Bei der Ausführungsform gemäß Figur 9 ist zu erkennen, dass zwei Abschnitte 62, 64 in Richtung der Längsachse Z vorgesehen sind, in welchen das Spaltrohr unterschiedliche Wandstärken aufweist. In dem Abschnitt 62 ist sowohl der Durchmesser des Spaltrohres 36 als auch die Wandstärke größer als in dem Abschnitt 64. Dies wird dadurch erreicht, dass der Spalt 22, zwischen innerem Formteil 2 und äußerem Formteil 18 entsprechend unterschiedlich breit ausgebildet wird.

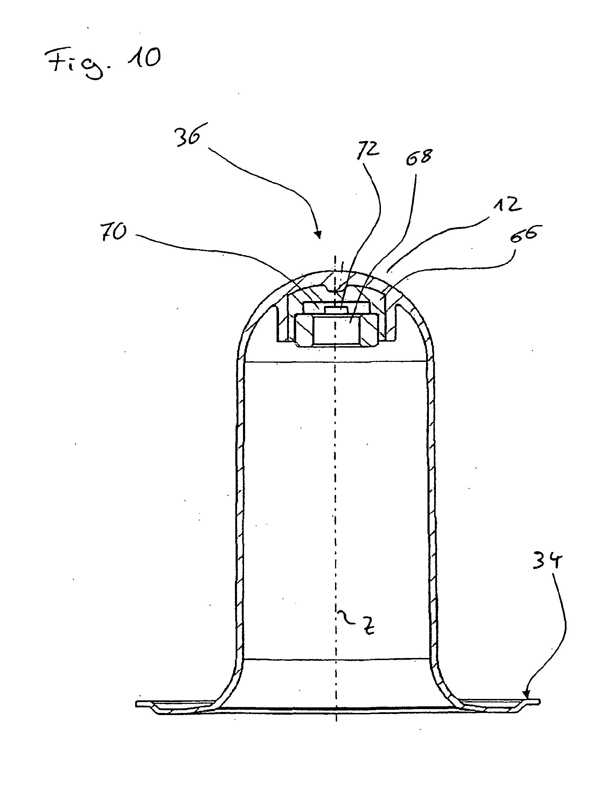

Figur 10 zeigt eine Schnittansicht einer weiteren Ausführungsform des erfindungsgemäßen Spaltrohres 36, auch hier ist die Wandung vereinfacht ohne Unterscheidung der inneren Lage 38 und der äußeren Lage 4 dargestellt. Wesentlich bei der Ausgestaltung gemäß Figur 10 ist, dass in das Spaltrohr 36, d. h. in die innere Lage 38 an dem geschlossenen Axialende 12 ein Lagerhalter 66 eingegossen ist. In dem Lagerhalter 66 ist ein Lager 68 angeordnet. Das Lager 68 dient zur Lagerung der Rotorwelle des in dem Spaltrohr 36 anzuordnenden Rotors. Zwischen dem Lager 68 und dem Lagerhalter 66 ist ein Freiraum 70 ausgebildet. Darüber hinaus sind Strömungswege 72 vorgesehen, welche sich in axialer Richtung am Umfang des Lagers 68 zwischen diesem und dem Lagerhalter 66 erstrecken. Diese Strömungswege 72 und der Freiraum 70 dienen dazu, dass das Fluid im Inneren des Spaltrohres 36 auch zu dem Lager gelangt und das Lager umströmen kann.

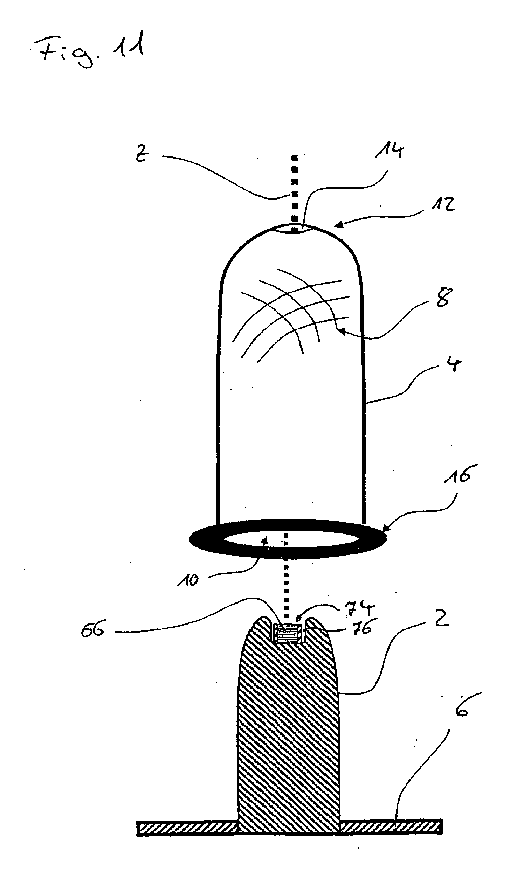

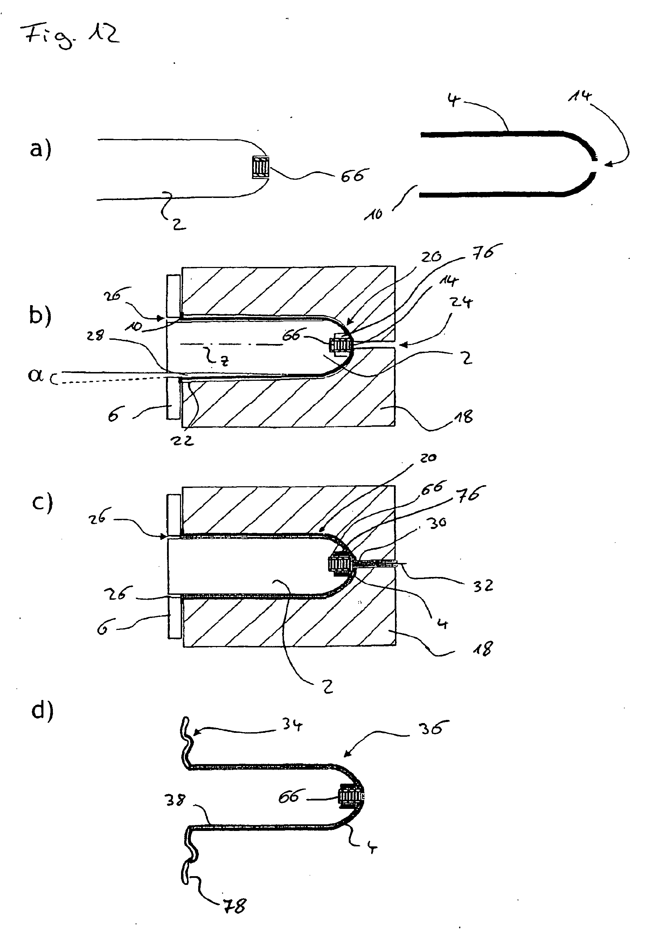

Anhand der Figuren 11 und 12, welche im Wesentlichen in Ihrer Darstellung den Figuren 1 und 2 entsprechen, wird erläutert, wie ein Lagerhalter 66 in das Spaltrohr 36 eingegossen werden kann. Dabei ist zu verstehen, dass statt des Lagerhalters 66 auch direkt ein Lager 68 eingegossen werden könnte, was entsprechend erfolgen würde. In Figuren 11 und 12 ist der Lagerhalter 66 bzw. das Lager 68 nur schematisch dargestellt. Es ist zu verstehen, dass diese Elemente wie in den anderen Figuren gezeigt ausgebildet werden können.

In Figur 11 ist zu erkennen, dass an dem inneren Formteil 2 des Spritzgusswerkzeuges am freien Stirnende, welches dem ersten Längsende 12 des Spaltrohres bzw. der äußeren Lage 4 zugewandt ist, eine stirnseitige Ausnehmung 74 ausgebildet ist, in welche der Lagerhalter 66 eingelegt wird. Dabei sind in der Ausnehmung 74 hier nicht näher gezeigte Mittel vorgesehen, um den Lagerhalter 66 genau bezüglich der Längsachse Z zu zentrieren und in definierter Position an den inneren Formteil 2 zu fixieren. Zwischen dem Lagerhalter 66 und der Innenwandung, d. h. der umfänglichen Innenwandung der Ausnehmung 74 verbleibt dabei ein ringförmiger Spalt 76. Das Lager 68 bzw. der Lagerhalter 66 kann an seiner dem Spalt 76 zugewandten Oberfläche in geeigneter Weise strukturiert sein, sodass der Kunststoff 30 später in diese Struktur eingreifen kann und eine feste Verbindung zwischen dem Lagerhalter 68 und der inneren Lage 38 sowohl in umfänglicher als auch in axialer Richtung bezüglich der Längsachse Z bewirken kann. Das Einlegen der inneren Lage 4 zwischen dem äußeren Formteil 8 und dem inneren Formteil 2 erfolgt auch bei dem Ausführungsbeispiel gemäß Figuren 11 und 12 in der anhand der Figuren 1 und 2 erläuterten Weise. Das heißt, nach dem Einlegen des Lagerhalters 66 in das innere Formteil 2 wird die äußere, vorgefertigte Lage über dieses innere Formteil 2 gestülpt. Anschließend erfolgt wie in den Figuren 12b und 12c gezeigt ist, entsprechend der Erläuterung zu Figuren 2b und 2c das Einspritzen des Kunststoffs 30. Diesbezüglich wird auf die Beschreibung zu Figur 2 verwiesen. Der Kunststoff 30 strömt dabei, wie in Figur 12c gezeigt ist, auch in den ringförmigen Spalt 76 und umfließt den Lagerhalter 66. Dabei tritt der Kunststoff mit entsprechenden Strukturierungen an der Oberfläche des Lagerhalters 66 in Eingriff. Wie in Figur 12d gezeigt ist, ist anschließend der Lagerhalter 66 in das Kunststoffmaterial der inneren Lage 38 fest eingegossen und somit in dem Spaltrohr 36 fixiert.

In Figur 12d ist ferner zu sehen, dass der Kragen 34 in radialer Richtung länger ausgebildet ist als der Kragen der äußeren Lage 4. Auf diese Weise wird ein Flansch- bzw. Kragenteil 78 gebildet, welches nur aus dem Kunststoff der inneren Lage im Spritzgussverfahren geformt ist. Das heißt der radial äußere Kragenteil 78 ist nicht durch die äußere Lage 4 verstärkt.

Es ist zu verstehen, dass die Anordnung eines Lagers 68 oder eines Lagerhalters 66 entsprechend auch bei den anhand der Figuren 4 und 5 erläuterten Verfahrensabläufen möglich ist. Die Dehnung der äußeren Lage 4 erfolgt in der oben beschriebenen Weise, sodass hier bezüglich des Spannungsverlaufes ebenfalls die anhand von Figur 3 erläuterten Vorteile erreicht werden.

Als Kunststoff 30 für die innere Lage 38 kann bei allen vorangehend beschriebenen Ausführungsformen ein homogenes Kunststoffmaterial oder ein Kunststoff-Komposit-Material zum Einsatz kommen. Ein solches Kunststoff-Komposit-Material kann neben dem Kunststoff Bestandteile aus anderen Kunststoffen oder Materialien enthalten. Insbesondere können, wie oben beschrieben, einzelne Fasern zur Verstärkung zugesetzt sein. Diese können dann in der oben beschriebenen Weise in dem Spaltrohr definiert orientiert werden.

### Bezugszeichenliste

| | | |
|---|---|---|
| 2 | - | Inneres Formteil |
| 4 | - | äußere Lage |
| 6 | - | Basisplatte |
| 8 | - | Fasern |
| 10 | - | erstes Längsende |
| 12 | - | zweites Längsende |
| 14 | - | Öffnung |
| 16 | - | Kragen |
| 18 | - | äußeres Formteil |
| 20 | - | Ausnehmung |
| 22 | - | Spalt |
| 24 | - | Einspritzöffnung |
| 26 | - | Entlüftungsöffnungen |
| 28 | - | Spalt |
| 30 | - | Kunststoff |
| 32 | - | Fließrichtung |
| 33 | - | Spalt |
| 34 | - | Kragen |
| 36 | - | Spaltrohr |
| 38 | - | Innere Lage |
| 40 | - | Zugspannungen |
| 42 | - | Druckspannungen |
| 44 | - | Kanal |
| 46 | - | Einspritzöffnungen |
| 48 | - | Spalt |
| 49 | - | Ringspalt |
| 50 | - | Fasern |
| 52 | - | Gewebeschlauch |
| 54 | - | Abschnitt |
| 56 | - | Gewebestruktur |
| 58 | - | Kern |
| 59 | - | Heizeinrichtung |
| 60 | - | Pressform |
| 61 | - | Basisplatte |
| 62, 64 | - | Abschnitte |
| 66 | - | Lagerhalter |
| 68 | - | Lager |
| 70 | - | Freiraum |
| 72 | - | Strömungswege |
| 74 | - | Ausnehmung |
| 76 | - | Spalt |
| 78 | - | Kragenteil |
| Z | - | Längsachse des Spaltrohres |
| A | - | axiale Richtung |
| R | - | Radiale Richtung |

## Patentansprüche

1. Spaltrohr eines Antriebsmotors für ein Pumpenaggregat, wobei das Spaltrohr (36) zumindest teilweise aus Kunststoff gefertigt ist, **dadurch gekennzeichnet, dass**
das Spaltrohr (36) eine äußere Lage (4) aus einem elastisch vorgespannten Material und eine innere Lage (38) aus einem gespritzten Kunststoff (30) aufweist, welcher zur Verstärkung Fasern (50) enthält und wobei die äußere Lage (4) um ein Maß elastisch dehnbar ist, welches größer ist als das Maß, um welches der gespritzte Kunststoff (30) bei seiner Erstarrung schrumpft und die äußere Lage (4) durch ihre Vorspannung eine von außen auf die innere Lage wirkende Druckspannung bewirkt.

2. Spaltrohr nach Anspruch 1, **dadurch gekennzeichnet, dass** das vorgespannte Material (4) ein Fasermaterial und insbesondere ein Gewebe enthält, welches vorzugsweise in ein Kunststoffmaterial eingebettet ist.

3. Spaltrohr nach einem der vorangehenden Ansprüche, **dadurch gekennzeichnet, dass** die äußere Lage (4) zumindest eine Öffnung (14) aufweist, durch welche der Kunststoff von der Außenseite der äußeren Lage (4) in deren Inneres gespritzt ist.

4. Spaltrohr nach einem der vorangehenden Ansprüche, **dadurch gekennzeichnet, dass** der Kunststoff ein Thermoplast enthält.

5. Spaltrohr nach einem der vorangehenden Ansprüche, **dadurch gekennzeichnet, dass** die Fasern (50), welche der Kunststoff zur Verstärkung enthält, definiert orientiert sind.

6. Spaltrohr nach einem der vorangehenden Ansprüche, **dadurch gekennzeichnet, dass** die innere Lage (38) mehrere Schichten (38a, 38b, 38c) aufweist, in welchen in dem Kunststoff vorhandene Fasern (50) unterschiedlich definiert orientiert sind.

7. Spaltrohr nach einem der vorangehenden Ansprüche, **dadurch gekennzeichnet, dass** vorgespannte Material (4) thermoplastische Fasern, Karbonfasern, Glasfasern, Metallfasern und/oder Aramidfasern aufweist.

8. Spaltrohr nach einem der vorangehenden Ansprüche, **dadurch gekennzeichnet, dass** in den Kunststoff (30) der inneren Lage (38) ein Lager (68) oder ein Lagerhalter (66) eingegossen ist.

9. Verfahren zum Herstellen eines Spaltrohres eines Antriebsmotors für ein Pumpenaggregat, wobei das Spaltrohr (36) zumindest teilweise aus Kunststoff gefertigt wird, **gekennzeichnet durch** folgende Schritte:
Einlegen einer äußeren Lage (4) aus einem elastisch dehnbaren Material in ein Spritzgusswerkzeug mit zumindest einem inneren (2)und einem äußeren (18) Formteil,
Einbringen von flüssigem Kunststoff in einen Freiraum (22, 28) zwischen dem inneren (2) und dem äußeren (18) Formwerkzeug in der Weise, dass der Kunststoff (30) zwischen dem inneren Formwerkzeug (2) und der äußeren Lage (4) eingebracht wird, wobei das dehnbare Material (4) um ein Maß gedehnt wird, welches größer ist als das Maß, um welches der eingebrachte Kunststoff (30) bei seiner Erstarrung schrumpft, und Erstarren des Kunststoffes in dem Spritzgusswerkzeug.

10. Verfahren nach Anspruch 9, **dadurch gekennzeichnet, dass** das dehnbare Material (4) ein Fasermaterial und insbesondere ein Gewebe ist.

11. Verfahren nach einem der Ansprüche 9 bis 10, **dadurch gekennzeichnet, dass** während des Einbringens und/oder Erstarrens des Kunststoffes (30) das innere Formwerkzeug (2) relativ zu dem äußeren Formwerkzeug (18) und/oder relativ zu der äußeren Lage (4) um die Längsachse (Z) des zu formenden Spaltrohres (36) gedreht wird.

12. Verfahren nach einem der Ansprüche 9 bis 11, **dadurch gekennzeichnet, dass** der Kunststoff (30) zwischen innerem Formwerkzeug (2) und äußerer Lage (4) beim Einspritzen im Wesentlichen parallel zu der Längsachse (Z) des zu formenden Spaltrohres (36) fließt.

13. Verfahren nach einem der Ansprüche 9 bis 12, **dadurch gekennzeichnet, dass** der Kunststoff (30) in das Innere der äußeren Lage (4) von einer axialen, geschlossenen Stirnseite (12) des zu formenden Spaltrohres (36) her oder von einer axialen offenen Stirnseite (10) des zu formenden Spaltrohres (36) her eingespritzt wird.

14. Verfahren nach einem der Ansprüche 9 bis 13, **dadurch gekennzeichnet, dass** der Kunststoff (30) in das Innere der äußeren Lage (4) an zumindest einer Position zwischen den beiden Axialenden (10, 12) des zu formenden Spaltrohres eingespritzt wird.

15. Verfahren nach einem der Ansprüche 9 bis 14, **dadurch gekennzeichnet, dass** der Kunststoff (30) in das Innere der äußeren Lage (4) durch eine in der äußeren Lage ausgebildete Öffnung (14) eingebracht wird, welche vorzugsweise an einer Position zentral im Boden (12) des zu formenden topfförmigen Spaltrohres (36) angeordnet ist.

16. Verfahren nach einem der Ansprüche 9 bis 15, **dadurch gekennzeichnet, dass** dem Kunststoff (30) Fasern zur Verstärkung zugesetzt werden.

17. Verfahren nach einem der Ansprüche 9 bis 16, **dadurch gekennzeichnet, dass** die äußere Lage (4) vor dem Einsetzen in das Spritzgusswerkzeug in eine Form gebracht wird, welche im Wesentlichen der Form des zu formenden Spaltrohres (36) entspricht.

18. Verfahren nach einem der Ansprüche 9 bis 17, **dadurch gekennzeichnet, dass** in das Spritzgusswerkzeug vor dem Einbringen des flüssigen Kunststoffes (30) ein Lager (68) oder Lagerhalter (66) an vorbestimmter Position eingelegt wird.

19. Verfahren nach einem der Ansprüche 10 bis 18, **dadurch gekennzeichnet, dass** das Spritzgusswerkzeug einen Spalt (33) aufweist, welcher zur Ausbildung eines sich radial erstreckenden Kragens (34) an dem offenen Ende des zu fertigenden Spaltrohres (36) ausgebildet ist, wobei während des Erstarrens des Kunststoffes (30) auf zumindest eine der den Spalt (33) definierenden Wandungen des Spritzgusswerkzeuges ein zu der gegenüberliegenden Wandung hin gerichteter Druck aufgebracht wird.

## Claims

1. A can of a drive motor for a pump assembly, wherein the can (36) at least partly is manufactured of plastic,
**characterised in that**
the can (36) comprises an outer layer (4) of an elastically prestressed material, and an inner layer (38) of an injected plastic (30) which contains fibres (50) for reinforcement, wherein the outer layer (4) is elastically extensible by an amount which is larger than the amount by which the injected plastic (30) shrinks on its solidification, and the outer layer (4) due to its prestressing effects a pressure stress acting from the outside onto the inner layer.

2. A can according to claim 1, **characterised in that** the prestressed material (4) contains a fibre material and in particular a fabric, which is preferably embedded into a plastic material.

3. A can according to one of the preceding claims, **characterised in that** the outer layer (4) comprises at least one opening (14), through which the plastic is injected from the outer side of the outer layer (4), into its inside.

4. A can according to one of the preceding claims, **characterised in that** the plastic contains a thermoplastic.

5. A can according to one of the preceding claims, **characterised in that** the fibres (50) which the plastic contains for reinforcement are orientated in a defined manner.

6. A can according to one of the preceding claims, **characterised in that** the inner layer (38) comprises several plies (38a, 38b, 38c), in which fibres (50) present in the plastic are orientated in a differently defined manner.

7. A can according to one of the preceding claims, **characterised in that** the prestressed material (4) comprises thermoplastic fibres, carbon fibres, glass fibres, metal fibres and/or aramide fibres.

8. A can according to one of the preceding claims, **characterised in that** a bearing (68) or a bearing holder (66) is moulded into the plastic (30) of the inner layer (38).

9. A method for manufacturing a can of a drive motor for a pump assembly, wherein the can (36) is at least partly manufactured of plastic, **characterised by** the following steps:
insertion of an outer layer (4) of an elastically extensible material into an injection moulding tool with at least one inner (2) and an outer (18) mould part,
introduction of fluid plastic into a free space (22, 28) between the inner (2) and the outer (18) moulding tool, in the manner such that the plastic (30) is introduced between the inner mould tool (2) and
the outer layer (4), wherein the extensible material (4) is extended by an amount which is larger than the amount by which the introduced plastic (30) shrinks on its solidification,
and the solidification of the plastic in the injection moulding tool.

10. A method according to claim 9, **characterised in that** the extensible material (4) is a fibre material and in particular a fabric.

11. A method according to one of the claims 9 to 10, **characterised in that** the inner mould tool (2) is rotated relative to the outer mould tool (18) and/or relative to the outer layer (4) about the longitudinal axis (Z) of the can (36) to be moulded, during the introduction and/or solidification of the plastic (30).

12. A method according to one of the claims 9 to 11, **characterised in that** the plastic (30) between the inner mould part (2) and the outer layer (4) flows essentially parallel to the longitudinal axis (Z) of the can (36) to be moulded, on injecting.

13. A method according to one of the claims 9 to 12, **characterised in that** the plastic (30) is injected into the inside of the outer layer (4) from an axial, closed face-side (12) of the can (36) to be moulded, or from an axial, open face-side (10) of the can (36) to be moulded.

14. A method according to one of the claims 9 to 13, **characterised in that** the plastic (30) is injected into the inside of the outer layer (4) at least at one position between the two axial ends (10, 12) of the can to be moulded.

15. A method according to one of the claims 9 to 14, **characterised in that** the plastic (30) is introduced into the inside of the outer layer (4) through an opening (14) which is formed in the outer layer and which is preferably arranged at a position centrally in the base (12) of the pot-like can (36) to be moulded.

16. A method according to one of the claims 9 to 15, **characterised in that** fibres for reinforcing are added to the plastic (30).

17. A method according to one of the claims 9 to 16, **characterised in that** the outer layer (4) is brought into a shape which corresponds essentially to the shape of the can (36) to be moulded, before insertion into the injection moulding tool.

18. A method according to one of the claims 9 to 17, **characterised in that** a bearing (68) or a bearing holder (66) is inserted at a predefined position into the injection moulding tool before the introduction of the fluid plastic (30).

19. A method according to one of the claims 10 to 18, **characterised in that** the injection moulding tool comprises a gap (33) which is designed for the formation of a radially extending collar (34) at the open end of the can (36) to be manufactured, wherein during the solidification of the plastic (30), a pressure is exerted on at least one of the walls of the injection moulding tool which defines the gap (33), said pressure being directed towards the opposite wall.

## Revendications

1. Gaine d'un moteur d'entraînement pour un groupe motopompe, la gaine (36) étant réalisée au moins partiellement en matière plastique, **caractérisée en ce que** la gaine (36) présente une couche extérieure (4) en matériau élastiquement précontraint et une couche intérieure (38) constituée d'une matière plastique injectée (30) contenant des fibres (50) de renforcement, la couche extérieure (4) étant extensible élastiquement d'une valeur supérieure au degré de retrait de la matière plastique injectée (30) lors de sa solidification et la couche extérieure (4) opérant, par sa précontrainte, une contrainte de compression agissant de l'extérieur sur la couche intérieure.

2. Gaine selon la revendication 1, **caractérisée en ce que** le matériau précontraint (4) contient un matériau fibreux et, en particulier, un tissu qui est noyé, de préférence, dans une matière plastique.

3. Gaine selon l'une des revendications précédentes, **caractérisée en ce que** la couche extérieure (4) présente au moins une ouverture (14) à travers laquelle la matière plastique est injectée depuis la face externe de la couche extérieure (4) jusqu'à l'intérieur de celle-ci.

4. Gaine selon l'une des revendications précédentes, **caractérisée en ce que** la matière plastique contient un thermoplastique.

5. Gaine selon l'une des revendications précédentes, **caractérisée en ce que** les fibres (50) de renforcement contenues dans la matière plastique sont orientées de manière définie.

6. Gaine selon l'une des revendications précédentes, **caractérisée en ce que** la couche intérieure (38) présente plusieurs strates (38a, 38b, 38c) dans lesquelles des fibres (50) présentes dans la matière plastique ont une orientation définie de manière différente.

7. Gaine selon l'une des revendications précédentes, **caractérisée en ce que** le matériau précontraint (4) comprend des fibres thermoplastiques, fibres de carbone, fibres de verre, fibres métalliques et/ou fibres d'aramide.

8. Gaine selon l'une des revendications précédentes, **caractérisée en ce qu'**un palier (68) ou un support de palier (66) est noyé dans la matière plastique (30) de la couche intérieure (38).

9. Procédé de fabrication d'une gaine d'un moteur d'entraînement pour un groupe motopompe, dans lequel la gaine (36) est réalisée au moins partiellement en matière plastique, **caractérisé par** les étapes suivantes :
insertion d'une couche extérieure (4) en matériau extensible élastiquement dans un outil de moulage par injection comportant au moins une partie de moule intérieure (2) et une partie de moule extérieure (18),
introduction de matière plastique liquide dans un espace libre (22, 28) entre le moule intérieur (2) et le moule extérieur (18) de telle façon que la matière plastique (30) soit introduite entre le moule intérieur (2) et la couche extérieure (4), le matériau extensible (4) étant étiré d'une valeur supérieure au degré de retrait de la matière plastique (30) introduite lors de sa solidification, et
solidification de la matière plastique dans l'outil de moulage par injection.

10. Procédé selon la revendication 9, **caractérisé en ce que** le matériau extensible (4) est un matériau fibreux et, en particulier, un tissu.

11. Procédé selon l'une des revendications 9 à 10, **caractérisé en ce que**, pendant l'introduction et/ou la solidification de la matière plastique (30), on fait tourner le moule intérieur (2) par rapport au moule extérieur (18) et/ou par rapport à la couche extérieure (4) autour de l'axe longitudinal (Z) de la gaine (36) à former.

12. Procédé selon l'une des revendications 9 à 11, **caractérisé en ce que** la matière plastique (30) entre le moule intérieur (2) et la couche extérieure (4) s'écoule, lors de l'injection, d'une manière sensiblement parallèle à l'axe longitudinal (Z) de la gaine (36) à former.

13. Procédé selon l'une des revendications 9 à 12, **caractérisé en ce que** la matière plastique (30) est injectée à l'intérieur de la couche extérieure (4) à partir d'un côté frontal (12) axial fermé de la gaine (36) à former ou à partir d'un côté frontal (10) axial ouvert de la gaine (36) à former.

14. Procédé selon l'une des revendications 9 à 13, **caractérisé en ce que** la matière plastique (30) est injectée à l'intérieur de la couche extérieure (4) à au moins une position située entre les deux extrémités axiales (10, 12) de la gaine à former.

15. Procédé selon l'une des revendications 9 à 14, **caractérisé en ce que** la matière plastique (30) est introduite à l'intérieur de la couche extérieure (4) à travers une ouverture (14) réalisée dans la couche extérieure, qui est disposée, de préférence, à une position centrale dans le fond (12) de la gaine en forme de pot (36) à former.

16. Procédé selon l'une des revendications 9 à 15, **caractérisé en ce que** des fibres de renforcement sont ajoutées à la matière plastique (30).

17. Procédé selon l'une des revendications 9 à 16, **caractérisé en ce qu'**est donnée à la couche extérieure (4), avant insertion dans l'outil de moulage, une forme qui correspond sensiblement à la forme de la gaine (36) à former.

18. Procédé selon l'une des revendications 9 à 17, **caractérisé en ce qu'**un palier (68) ou un support de palier (66) est inséré à une position prédéterminée dans l'outil de moulage par injection avant introduction de la matière plastique (30) liquide.

19. Procédé selon l'une des revendications 10 à 18, **caractérisé en ce que** l'outil de moulage par injection présente un entrefer (33) configuré pour former une collerette (34) s'étendant radialement au niveau de l'extrémité ouverte de la gaine (36) à réaliser, une pression étant appliquée, pendant la solidification de la matière plastique (30), sur au moins l'une des parois de l'outil de moulage par injection définissant l'entrefer (33), pression dirigée vers la paroi opposée.
